# EUROPÄISCHE PATENTSCHRIFT

(11) **EP 3 231 780 B1**
(45) Veröffentlichungstag und Bekanntmachung des Hinweises auf die Patenterteilung: **11.08.2021**
(21) Anmeldenummer: 17165910.5
(22) Anmeldetag: 11.04.2017
(51) Int. Cl.: C04B 26/12, E04F 13/18, B29C 43/00, B29C 45/00

(54) **WANDVERKLEIDUNG AUS EINEM DUROPLASTISCHEN KUNSTSTOFF**
WALL COVERING MADE OF A THERMOSETTING PLASTIC
REVÊTEMENT MURAL EN MATIÈRE PLASTIQUE THERMODURCISSABLE

(30) Priorität: 11.04.2016 DE 202016101888 U
(43) Veröffentlichungstag der Anmeldung: 18.10.2017
(73) Patentinhaber: Tomaschek, Stephan, 01904 Neukirch (DE)
(72) Erfinder: Tomaschek, Stephan, 01904 Neukirch (DE)
(74) Vertreter: Kailuweit & Uhlemann Patentanwälte Partnerschaft mbB

(56) Entgegenhaltungen:
- DE-A1- 3 041 794
- DE-A1- 3 937 249
- DE-A1-102013 221 034
- GB-A- 1 017 103
- GB-A- 1 310 874

## Beschreibung

Die Erfindung betrifft ein Verfahren zur Herstellung eines Formteils zur Verkleidung von Wänden und Mauerwerk, welches einstückig ausgeführt und aus einem duroplastischen Kunststoff ausgebildet ist sowie das erfindungsgemäße Formteil.

Formteile, wie etwa plattenförmige Bauelemente, insbesondere Fliesen, werden zur Verkleidung von Wänden, Decken und Böden verwendet. Hierzu sind vorzugsweise flache, plattenförmige Bauelemente zweckmäßig.

Bekannt sind beispielsweise Formteile, wie etwa plattenförmige Bauelemente in Form von Fliesen, welche aus Keramik, Steinzeug, Feinsteinzeug, Steingut, Naturstein, o. ä. gefertigt werden. Diese weisen zumeist aufgrund des Materials ein hohes Gewicht auf und müssen mittels Kleber angeordnet werden. Zum Schutz der Oberfläche wird zudem in der Regel eine Glasur aufgebracht. Dadurch ergibt sich der Nachteil, dass eine nachfolgende Überarbeitung bzw. Beschichtung der Oberflächen kaum oder nur schwer möglich ist.

Ferner sind großformatige Fliesenelemente mit Trägerschichten aus Beton, Blech, Kunststoffplatten, Holz etc. bekannt. Der Nachteil besteht darin, dass die Material-, Herstellungs- und Montagekosten hoch sind, die Fliesenelemente ein sehr hohes Gewicht und eine große Dicke von mindestens 25 mm aufweisen.

Es wäre daher in hohem Maße wünschenswert ein Formteil zur Verkleidung von Wänden, Decken oder Böden bereitzustellen, welches sich durch geringe Kosten und ein reduziertes Gewicht auszeichnet, eine einfache Verarbeitung gewährleistet und durch eine Beschichtung einen natürlichen optischen Eindruck gewährleistet.

Im Stand der Technik sind hierzu verschiedene Ansätze beschrieben.

So offenbart die DE 3937249 A1 plattenförmige Kunststoff-Formteile mit dekorativer Oberfläche, wobei die Kunststoffformteile als Fliesen verwendet werden können. Diese bestehen aus einer Mischung aus 20-60 Gew.% eines vernetzten duroplastischen Kunststoffs, 10-70 Gew.% eines inerten Füllstoffs, 0-50 Gew.% Glasfasern, 0,1-5 Gew.% Farbstoffe und/oder Pigmente, 0-20 Gew.% weiterer üblicher Kunstharz-Additive, wobei die Formteile 10 bis 80 Gew.% zerkleinerten Kunststoffabfall mit einer mittleren Teilchengröße (Gewichtsmittel) zwischen 1 und 40 mm enthalten. Die plattenförmigen Kunststoff-Formteile werden dabei nach einem Verfahren hergestellt, bei dem man zerkleinerten Kunststoff-Abfall mit einem härtbaren duroplastischen Kunststoff und einem Härter sowie gegebenenfalls Füllstoffen und weiteren Kunstharz-Additiven mischt, die Masse formt und aushärtet und gegebenenfalls die Oberfläche des erhaltenen Formteils poliert und/oder mit einer Deckschicht versieht. Die Formmasse wird in einem Pressrahmen bei 150°C, 60 bar zu einer 10 mm dicken Platte verpresst. Nach 10 min ist die Härtung beendet und die Platte kann aus der Form entnommen werden. Dadurch wird ein Faserverbundkunststoffformteil erhalten. Durch die Verwendung von Kunststoffabfällen kann jedoch kein reproduzierbares Ergebnis, insbesondere in der Farbgebung erzielt werden. Grund hierfür ist vor allem, dass die verwendeten Duromer-Abfälle nicht wieder durch Erhitzen in Schmelze gebracht werden und mithin als Granulat in die Platte eingebracht werden. Im Ergebnis wird daher auch keine glatte Oberfläche erhalten. Zudem ist mit einer Aushärtungszeit von 10 min eine effiziente Herstellung nur mit hohem Aufwand realisierbar.

Weiterhin offenbart die DE 3041794 A1 ein Verfahren zum Herstellen von dessinierten Formkörpern wobei der Grundkörper aus einer härtbaren Masse auf Basis von duroplastischen Kunststoffen mit Härtern oder in Kombination mit anorganisch härtenden Systemen inerten Füllstoffen, sowie ggf. Beschleunigern, Farbmitteln und weiteren Hilfsstoffen durch Gießen und/oder Formpressen hergestellt wird und ggf. mit einer Oberflächenschicht aus einem härtbaren Lackharz versehen wird. Der Grundkörper wird dabei bei 60°C bis 130°C für 2 Stunden gehärtet und anschließend mit einer Deckschicht versehen. Auch bei diesem Verfahren wird der Grundkörper aus einer Mischung aus verschiedenen Stoffen hergestellt. Zudem ist das Verfahren aufgrund der langen Aushärtungszeit kaum praktikabel.

Schließlich offenbart die KR 100185535 B1 eine Kunststofffliese mit einem Grundkörper aus Kunststoff, welcher durch Pressen hergestellt wird, und einer darauf applizierten Farbschicht.

Weiterhin offenbart die DE 10 2013 221 034 B4 ein Verfahren zur Beschichtung eines Formteils aus Kunststoff, welche beispielsweise als plattenförmige Bauelemente ausgebildet sind sowie den damit erzeugten Formkörper. Der beschichtete Formkörper, welcher beispielsweise als Fliese ausgestaltet ist, wird dabei aus einem Kunststoff, vorzugsweise einem Duromer hergestellt. Die Beschichtung erfolgt dabei durch Aktivierung der Oberfläche mittels Wärmeeintrag und nachfolgender Applikation von pulverförmigem Material. Die Beschichtung erfolgt mithin nur oberflächlich.

Weiterhin beschreibt die GB 1 310 874 A die Anbringung von Wandverkleidungen aus Kunststoffen an Wänden.

Die vorstehend beschriebenen plattenförmigen Bauelemente sind nur bedingt geeignet, den bestehenden Bedürfnissen nach Bauelementen, welche sich durch geringe Kosten und ein reduziertes Gewicht auszeichnen, eine einfache Verarbeitung gewährleisten und eine nachfolgende Beschichtung erlauben, gerecht zu werden. Problematisch erscheinen hierbei vor allem neben dem Gewicht der benötigte Zeitaufwand bei der Fertigung, die aufwändige Formfüllung und die nur begrenzte Möglichkeit der Nachbehandlung.

Die Aufgabe der vorliegenden Erfindung besteht daher darin eine Verkleidung von Wandflächen bereitzustellen, welche die vorbenannten Nachteile überwindet. Ebenfalls Aufgabe der Erfindung ist ein Verfahren zur Herstellung einer Verkleidung von Wandflächen anzugeben.

Die Aufgabe wird durch die unabhängigen Ansprüche gelöst. Vorteilhafte Ausgestaltungen sind in den abhängigen Ansprüchen angegeben.

Erfindungsgemäß wird gemäß einem ersten Aspekt der Erfindung ein Verfahren zur Herstellung eines Formteils vorgeschlagen, welches einstückig aus einem duroplastischen Kunststoff ausgeführt ist, zur Verkleidung von Wänden und Mauerwerk Erfindungsgemäß wird das Formteil durch ein Warmpressverfahren hergestellt.

Erfindungsgemäß wird das Formteil einstückig aus einem Kunststoff ausgeführt, wobei der Kunststoff ein Harnstoff-Formaldehyd-Harz mit einer Rohdichte von 1,49 - 1,52 g/cm³ nach DIN 53479 umfasst. Überaschenderweise hat sich herausgestellt, dass Harnstoff-Formaldehyd-Harz mit einer Rohdichte von 1,49- 1,52 g/cm³ nach DIN 53479 sich besonders eignet das erfindungsgemäße Formteil zur Verkleidung von Wänden und Mauerwerk herzustellen, da die Formteile nach der Herstellung bereits die gewünschte Oberflächenstrukturierung aufweisen, die der von mineralischen Oberflächen, wie beispielsweise Stein entspricht. Dadurch wird ein haptischer Eindruck vermittelt, welche mit anderen Kunststoffen nicht erzielt werden kann.

Weiterhin vorteilhaft ist das das Harnstoff-Formaldehyd-Harz im Gegensatz zu anderen Kunststoffen nicht nachträglich ausgast und mithin keine Geruchsbelästigung erfolgt.

In einer Ausführungsform weist der Harnstoff-Formaldehyd-Harz ein Schüttgewicht von 0,53 - 0,62 g/cm³ nach DIN 53466 auf.

In einer Ausführungsform weist der Kunststoff den erfindungsgemäßen Harnstoff-Formaldehyd-Harz von >80 Gew.-%, bevorzugt > 90Gew.-%, besonders bevorzugt von >98 Gew.-% auf. Alternativ kann der Kunststoff auch zu 100 Gew.-% aus dem erfindungsgemäßen Harnstoff-Formaldehyd-Harz ausgebildet sein.

In einer weiteren Ausführungsform beträgt bei der Herstellung im Warmpressverfahren die Presstemperatur 100°C-200°C, vorzugsweise 130°C bis 180°C.

In einer weiteren Ausführungsform beträgt der Pressdruck 115 bar-300 bar.

In einer weiteren Ausführungsform der Erfindung weist das Formteil auf einer Seite eine strukturierte Oberfläche auf. Die Oberfläche ist bevorzugt derart ausgebildet, dass diese eine strukturierte unregelmäßige Form aufweist, sodass das Formteil als Verblendstein mit unregelmäßig strukturierter Oberfläche ausgebildet ist. Dadurch kann ein besonders wünschenswerter dekorativer Effekt erzeugt werden, welcher als Steinimitat zur Verblendung von Wand- und Mauerflächen genutzt werden. Besonders vorteilhaft ist gegenüber den bisher bekannten Verblendelementen das durch den Kunststoff bedingte geringe Gewicht, welches eine leichte Verarbeitbarkeit ermöglicht. Zudem zeichnet sich das erfindungsgemäße Formteil durch geringe Herstellungskosten und hohe Flexibilität in der Nachbearbeitung aus. Alternativ kann die eine Seite der Oberfläche des Formteils auch im Wesentlichen eben ausgebildet sein. Dadurch wird ein plattenförmiges Bauelement bereitgestellt, welches fliesenähnlich verarbeitet werden kann.

Erfindungsgemäß werden der Harnstoff-Formaldehyd-Harz- Formmasse Zuschlagstoffe zugegeben, wobei der Anteil der Zuschlagstoffe <20 Gew.-%, bevorzugt <10 Gew.-%, besonders bevorzugt < 2 Gew.-% beträgt.

Ebenfalls erfindungsgemäß sind die Zuschlagstoffe ausgewählt aus pulverförmigen Materialien oder farbigen Pressmassen. Pulverförmige Materialien sind dabei beispielsweise Pigmente, Färbemittel, Gesteinsmehle, verschiedenste Sandarten, Feinkies, Glimmer.

Bevorzugt werden die Zuschlagstoffe zur Erzielung einer Färbung des Formteils zu der erfindungsgemäßen Harnstoff-Formaldehyd-Harz-Masse zugegeben.

In einer Ausführungsform der Erfindung wird eine homogene Mischung aus dem erfindungsgemäßen Harnstoff-Formaldehyd-Harz und den Zuschlagsstoffen vor dem Pressvorgang hergestellt. Abschließend wird die Mischung in das Werkzeug eingebracht und das Formteil hergestellt. Durch die vorherige Vermischung der erfindungsgemäßen Harnstoff-Formaldehyd-Harz-Masse und der Zuschlagstoffe ergibt sich eine im Wesentlichen homogene farbige Gestaltung des Formteils. Überraschenderweise wurde festgestellt, dass durch die Zugabe der Zuschlagstoffe vor dem Pressvorgang eine Färbung des Formteils erzielt werden kann, welche eine Steinoptik in natürlicherweise nachahmt.

In einer alternativen Ausgestaltung werden die Zuschlagstoffe zuerst in das Werkzeug eingebracht und anschließend die erfindungsgemäße Formaldehyd-Harz-Masse zugegeben. Es erfolgt mithin keine Vermischung der Formaldehyd-Harz-Masse mit den Zuschlagstoffen, sodass eine inhomogene Färbung des Formteils erzielt wird, welche unterschiedliche Gesteinsgefüge nachbilden können.

In einer weiteren Ausführungsform der Erfindung wird die Oberfläche des Formteils nachfolgend beschichtet. Dabei können als Beschichtung der Oberfläche beispielsweise pulverförmige Materialien oder Lacke auf die Oberfläche aufgebracht werden.

In einer Ausgestaltung der Ausführungsform erfolgt eine Lackierung des Formteils, wobei Klarlack oder farbige Lacke verwendbar sind.

In einer weiteren Ausführungsform wird als pulverförmiges Material solches Material verwendet, welches optisch einen Gesteinseindruck vermittelt. Solche pulverförmigen Materialien können etwa Gesteinsmehle, verschiedenste Sandarten, Feinkies, Glimmer etc. sein. Anschließend erfolgt eine Fixierung der aufgebrachten pulverförmigen Materialien auf den plattenförmigen Bauelementen. Hierzu eignen sich etwa Klarlack, Klebstoff, Silikon, Vinylacetat, Acrylate etc.

In einer weiteren Ausführungsform der Erfindung weist das Formteil an zumindest einer Seite ein Verbindungselement auf, welches eine Verbindung zu einem benachbart angeordneten plattenförmigen Bauelement ermöglicht.

Das Verfahren erfasst dabei das Einbringen der Harnstoff-Formaldehyd-Harz- Formmasse in Pulverform in einen Kunststoffpressautomaten, wie etwa eine Duroplastpresse mit Schneckendosierung mit integrierter Vorwärmung und Universal-Massenzuführung (Maschinenfabrik Lauffer GmbH & Co. KG, Horb am Neckar, Deutschland), und weiter in eine vorgeheizte Pressform. Das Schüttgewicht der Harnstoff-Formaldehyd-Harz- Formmasse beträgt dabei 0,53 - 0,62 g/cm³ nach DIN 53466.

Beim Schließen der Form wird das Harnstoff-Formaldehyd-Harz bis zum plastischen Zustand erweicht. Auftretende Gase entweichen beim Öffnen der Form und werden durch eine Absaugvorrichtung entfernt. Das heiße Formteil wird automatisch aus der Form entfernt und auf ein Förderband aufgebracht.

Bevorzugt beträgt die Presstemperatur 100°C-200°C, vorzugsweise 130°C bis 180°C. Der Pressdruck beträgt 115 bar-300 bar (ca. 80 t bis 200 t) und die Härtezeit für 2 mm Wanddicke 10 sek-18o sek, vorzugsweise 20 sek-120 sek.

Bei der Pressverarbeitung spielt die Dosierung der Formmasse eine wichtige Rolle. Bei der Spritzgießverarbeitung wird dem Werkzeug solange Schmelze zugeführt, bis es volumetrisch gefüllt ist. Dies ist bei der Pressverarbeitung nicht möglich, da es während des Pressvorgangs keine Verbindung mehr nach außen gibt. Das bedeutet, die erforderliche Menge an Formmasse muss vor dem Schließen des Werkzeugs in den Formhohlraum eingebracht werden. Wird zu wenig dosiert, kann der Formhohlraum nicht vollständig ausgefüllt werden. Gibt man zu viel Formmasse in die Kavität, kommt es zu hohen Drücken im Werkzeug und ein beträchtlicher Teil der Schmelze fließt in den Überlauf und erzeugt Grat, der häufig eine Nacharbeit erforderlich macht. Des Weiteren werden dadurch Geometrie und Abmaße negativ beeinflusst.

Eine geringfügige Überdosierung ist jedoch üblich, damit eine vollständige Formfüllung gewährleistet ist. Der dabei meist entstehende feine "Flittergrat"; kann z. B. leicht durch Trovalieren oder Strahlen entfernt werden.

Die Dosierung der Formmassen kann üblicherweise als Volumendosierung, Gewichtsdosierung oder Tablettendosierung erfolgen.

Die Volumendosierung erfolgt durch das Einfüllen der Formmasse in festgelegte Hohlräume mit konstantem Volumen. Bei jedem Presszyklus wird immer exakt dieses Volumen an Formmasse in das Werkzeug gegeben. Praktisch kann dies z. B. durch Tellerzuteiler erfolgen, wobei zwei Rundplatten mit jeweils einer deckungsgleichen Bohrung und entsprechender Plattendicke aufeinander drehend gelagert sind. Das Loch der oberen Platte bewegt sich dicht schließend unter einen Trichter. Rieselfähiges Material kann in das Loch der oberen Drehscheibe fallen. Das Volumen wird durch den Lochdurchmesser und die Plattendicke bestimmt. Die gefüllte Scheibe dreht sich weiter und gelangt über die deckungsgleiche Bohrung der unteren feststehenden Scheibe. Die Bohrung der unteren Scheibe ist in diesem Moment so positioniert, dass das dosierte Material in das Werkzeug fallen kann. Dies ist ein Beispiel für eine volumetrische Dosierung. Es sind jedoch auch viele andere Einrichtungen denkbar in der Praxis vorhanden (z. B. manuell mit Messbecher oder Trichter mit Einlass- und Auslassventil).

Ein wesentlicher Nachteil der volumetrischen Dosierung ist die Anfälligkeit für Dosierschwankungen. Dies ist insbesondere bei duroplastischen Formmassen zu beachten, da es hier leicht zu Chargenschwankungen kommt, in denen die Schüttdichte und Rieselfähigkeit variiert. Eine schwankende Schüttdichte hat jedoch einen wesentlichen Einfluss auf die tatsächlich dosierte Menge bei gleich bleibendem Volumen. Bei der volumetrischen Dosierung ist daher auf eine gleich bleibende Formmassenqualität zu achten. Insgesamt sollte es vermieden werden, Presswerkzeuge manuell von Hand zu beschicken, da es trotz konstantem Volumen (z. B. Messbecher) zu Dosierschwankungen kommen kann wodurch der zeitliche Ablauf nicht gleich gehalten wird, was zu Qualitätsunterschieden bei den Formteilen führt.

Die Zykluszeit ist auch bei der Pressverarbeitung stark von der Wanddicke des Formteils abhängig. Duroplaste sind schlechte Wärmeleiter, müssen jedoch für die erforderliche Vernetzungsreaktion auf die jeweilige Vernetzungstemperatur gebracht werden. Wird die Formmasse bei Raumtemperatur in die Presse gegeben, muss die gesamte Wärmeenergie über das Werkzeug zugeführt werden. Somit sind lange Zykluszeiten nicht zu vermeiden.

Wird die dosierte Formmasse jedoch vorgewärmt (bestenfalls auf Vernetzungstemperatur) in das Werkzeug eingefüllt, ergeben sich wesentliche Vorteile für die Zykluszeit.

Die Vorwärmmöglichkeiten in der Pressverarbeitung umfassen:
- Vorwärmung zwischen warmen Metallflächen
- Ofenvorwärmung
- Infrarotvorwärmung
- Hochfrequenzvorwärmung (HF-Vorwärmung)
- Mikrowellenvorwärmung
- Vorwärmung in beheizten Füllschablonen
- Vorplastifizierung.

Der prinzipielle Verfahrensablauf beim Pressen ist einfach. Eine möglichst exakt dosierte und ggf. vorgewärmte oder vorplastifizierte Menge Formmasse (verschiedene Zuführ- und Darreichungsformen möglich) wird in das Werkzeug gegeben. Die darauf folgende Schließzeit ist in zwei Phasen unterteilt. Zunächst fährt die bewegliche Werkzeughälfte im Schnellgang auf eine bestimmte Position, kurz vor dem Zusammentreffen der beiden Formplatten. An dieser Position wird die Schließbewegung stark abgebremst, damit es nicht zu Kollisionen (ineinander tauchende Kerne) kommen kann. Zudem muss die im Werkzeug befindliche Formmasse möglicherweise noch vollständig plastifiziert werden, damit der Kunststoff optimal in die Kontur der Form fließen kann. Ein schneller und vollständiger Schließvorgang könnte zu Werkzeugschäden und einer unnötigen Belastung der Formmasse führen.

Die Werkzeughälften fahren daher, nach dem Schnellgang, die letzten Millimeter mit verminderter Geschwindigkeit bis in die Endstellung. Beim Zufahren gelangt die Formmasse mehr und mehr in Kontakt mit der Werkzeugwand und wird durch die Werkzeugwandtemperatur und Friktion vollständig aufgeschmolzen und im Werkzeug durch die kontinuierliche Volumenverringerung gleichmäßig verteilt.

Ist das Werkzeug vollständig zugefahren, beginnt die Härtezeit, in der das Material seine Festigkeit erhält, bis es entformt werden kann. Die Härtezeit macht i. R. den größten Zeitanteil im Presszyklus aus, weshalb die Vorwärmung bereits als Vorteil herausgestellt wurde.

Bei allen Pressvorgängen wird dabei ein wesentlicher Vorteil gegenüber dem Spritzgießen deutlich. Die Fließvorgänge bei der Pressverarbeitung sind wesentlich schwächer ausgeprägt als beim Spritzgießen, bei dem die Schmelze von Beginn an immer fließt. Die kürzeren Fließwege und die geringere Scherung beim Pressen bewirkt eine deutlich geringere Orientierung von Molekülen und Füllstoffen. Dies wiederum hat Vorteile für die Formteilqualität. Pressteile zeigen isotropere Festigkeitseigenschaften und dadurch einen verminderten Verzug, im Gegensatz zu Spritzgießformteilen.

Daher versucht man diesen Effekt durch Spritzpress- und Spritzprägeverfahren auch auf das Spritzgießen zu übertragen und so Vorteile der Spritzgieß- und Pressverarbeitung zu vereinen.

Die in duroplastischen Formmassen enthaltenden flüchtigen Bestandteile (Wasser => Wasserdampf, Additive) müssen, wenn sie im Pressprozess anfallen, durch Lüftungsvorgänge entweichen können. Diese Lüftungsvorgänge werden während des Schließvorgangs oder innerhalb der Härtezeit durch fest programmierte, kurze Rückzugsbewegungen erzielt. Nach einem Rückzug (Auffahren des Werkzeugs um wenige Millimeter) erfolgt jedoch bereits nach kurzer Zeit (< 1-2 Sekunden) das Schließen des Werkzeuges.

Nach der Härtezeit fährt das Werkzeug vorsichtig auf und beginnt ab einer festgelegten Position mit einem schnelleren Auffahren. Das Formteil wird durch werkzeugseitige Auswerfer entformt und anschießend manuell, durch Abstreifbleche oder Handlinggeräte aus dem Werkzeug entnommen. Eine frei fallende Entformung wie beim Spritzgießen ist durch die vertikale Anordnung von Maschine und Werkzeug nicht möglich.

Die Pressteile haben i. R. direkt nach der Entformung an einigen Stellen Grat, der beim Pressen mehr oder weniger zwangsläufig entsteht. Dieser Grat muss in Nachbehandlungsverfahren wie z. B. Trovalieren oder Strahlen entfernt werden.

In einer weiteren Ausführungsform der Erfindung umfasst das Verfahren weiterhin eine nachfolgende Beschichtung des Formteils mit einem Adhäsionsmittel und eine anschließende Anordnung eines pulverförmigen Materials auf dem Adhäsionsmittel. Als zu verwendendes pulverförmiges Material eignet sich grundsätzlich jedes pulverförmige Material, jedoch ist es vorteilhaft solches Material zu verwenden, welches optisch einen Gesteinseindruck vermittelt. Solche pulverförmigen Materialien können etwa Gesteinsmehle, verschiedenste Sandarten, Feinkies, Glimmer etc. sein. Anschließend erfolgt eine Fixierung der aufgebrachten pulverförmigen Materialien auf dem Formteil. Hierzu eignen sich etwa Klarlack, Klebstoff, Silikon, Vinylacetat, Acrylate etc.

Ein weiterer Aspekt der Erfindung betrifft ein Formteil zur Verkleidung von Wänden und Mauerwerk hergestellt nach dem erfindungsgemäßen Verfahren, welches einstückig aus einem duroplastischen Kunststoff ausgeführt ist, wobei der Kunststoff
- ein Harnstoff-Formaldehyd-Harz mit einer Rohdichte von 1,49 - 1,52 g/cm³ nach DIN 53479 umfasst.

Erfindungsgemäß umfasst der Harnstoff-Formaldehyd-Harz-Formmasse weiterhin Zuschlagstoffe, wobei der Anteil der Zuschlagstoffe <20 Gew.-%, bevorzugt <10 Gew.-%, besonders bevorzugt < 2Gew.-% ist.

Ebenfalls erfindungsgemäß sind die Zuschlagstoffe aus pulverförmigen Materialien oder farbigen Pressmassen. Pulverförmige Materialien sind dabei beispielsweise Pigmente, Färbemittel, Gesteinsmehle, verschiedenste Sandarten, Feinkies, Glimmer.

Bevorzugt werden die Zuschlagstoffe zur Erzielung einer Färbung des Formteils zu dem duroplastischen Kunststoff zugegeben.

In einer weiteren Ausführungsform weist das Formteil an der dem Verbindungselement gegenüberliegenden Seite des Bauelements ein Gegenstück zum Verbindungselement auf, welches eine kraft- oder formschlüssige Verbindung zwischen Verbindungselement und Gegenstück ermöglicht. Beispielsweise kann eine formschlüssige Verbindung als Nut-Feder-Verbindung oder Steckverbindung ausgestaltet sein.

In einer weiteren Ausführungsform weist das Formteil auf der Rückseite eine Vertiefung auf. Das Bauelement weist damit auf der Unterseite einen Randbereich auf, welche die Dicke des Bauteils wesentlich bestimmt. Dadurch kann eine Einsparung des eingesetzten Ausgangsmaterials erzielt und gleichzeitig eine weitere Gewichtsreduktion erreicht werden.

In einer weiteren Ausführungsform weist das Formteil auf der Rückseite im Zentrum der Vertiefung eine Erhebung auf, welche als Klebepunkt zur Anordnung des Bauteils an die zu verkleidende Oberfläche ausgestaltet ist.

In einer weiteren Ausführungsform weist das Formteil auf der Rückseite im Randbereich zumindest ein Mittel zur Anordnung an die zu verkleidende Oberfläche auf. Dieses Mittel kann dabei etwa ein Klebepunkt sein auf dem etwa Kleber angebracht wird. Das Mittel ist dabei in gleicher Höhe wie der Randbereich ausgebildet, sodass Randbereich und Mittel in einer Ebene liegen. In einer alternativen Ausgestaltung der Ausführungsform ist das Mittel 2-3 mm unterhalb des Randbereichs in Richtung Rückseite des Formteils angeordnet.

In einer weiteren Ausführungsform weist das Formteil auf der Rückseite zumindest zwei, vorzugsweise vier stegförmige Elemente auf, welche zwischen dem Mittel zur Anordnung im Zentrum des Formteils und dem Randbereich angeordnet sind. Die zumindest zwei stegförmigen Elemente sind dabei gegenüberliegend vom zentral angeordneten Mittel zur Anordnung und mithin fluchtend angeordnet. Im Fall von vier stegförmigen Elementen sind diese jeweils zwischen Mittel zur Anordnung und dem Randbereich und zueinander rechtwinklig angeordnet. Die stegförmigen Elemente verstärken das Formteil und vermindern einen möglichen Verzug desselben.

In einer weiteren Ausführungsform weisen die zumindest zwei, vorzugsweise vier stegförmigen Elemente eine Nut auf. Diese Nut dient der Aufnahme eines Adhäsionsmittels, vorzugsweise ein Kleber und ermöglicht somit eine einfache Anordnung des Formteils an die zu verkleidende Oberfläche.

In einer Ausführungsform weist der Kunststoff nach DIN 5510/2 die Brennbarkeitsklasse S-4, die Rauchentwicklungsklasse SR-2 und die Tropfbarkeitsklasse ST-2 auf.

In einer weiteren Ausführungsform weist das Formteil nach der Beschichtung eine antibakterielle Oberfläche auf. Dadurch ist ein Einsatz des erfindungsgemäßen Formteils auch in Bereichen mit erhöhten Hygieneanforderungen, wie in Krankenhäusern, im Gastronomie- und Lebensmittelbereich denkbar.

Ein weiterer Aspekt der Erfindung betrifft die Verwendung des erfindungsgemäßen Verfahrens zur Herstellung eines Formteils zur Verkleidung von Wänden und Mauerwerk sowie die Verwendung des erfindungsgemäßen Formteils zur Verkleidung von Wänden und Mauerwerk. Mit dem erfindungsgemäßen Formteil wird ein Bauelement zur Verfügung gestellt, welches aufgrund der Möglichkeit einer schnellen und einfachen Montage der Bauelemente einen enormen Vorteil gegenüber handelsüblichen Fliesen oder Steinimitaten bietet. Durch das geringe Eigengewicht ist eine Montage schnell, ohne besondere Vorkenntnisse und ohne großen Aufwand sowie weitestgehend schmutzfrei möglich. Die Montage kann auf den verschiedensten Untergründen, wie Beton, Holz, Steinzeug, Gipskarton, Metall, Kunststoffen, Tapeten, etc. erfolgen. Das zur Montage verwendete Adhäsionsmittel richtet sich dabei vorrangig nach dem Untergrund auf dem das Bauelement angeordnet werden soll. Weiterhin ist auch die Art der Montage, beispielsweise ob mit ohne Fuge, sowie die und Dimensionsstabilität des Untergrundmaterials entscheidend. Aufgrund seiner Witterungsbeständigkeit kann das Formteil vorteilhaft zur Verkleidung von Wänden und Mauerwerk im Innen- und Außenbereich eingesetzt werden.

Ein weiterer Vorteil des erfindungsgemäßen Formteils ergibt sich durch die einfache Anbringung des Bauelements auf Tapete, wodurch eine einfache Montage in Mietwohnungen erfolgen kann. Dabei ist es besonders vorteilhaft, dass die Formteile, bei Einhaltung der Klebezonen durch den Monteur, zu einem späteren Zeitpunkt zerstörungs- und rückstandsfrei demontiert werden können. Dadurch werden Beschädigungen in Mietwohnungen vermieden und sogleich besteht die Möglichkeit in einfacher Weise dekorative Wandgestaltung auch für begrenzte Mietzeiträume bei geringem Aufwand und Kosten herzustellen. Vorteilhafterweise können die demontierten Formteile durch geringe Nacharbeit wiederverwendet werden.

Bevorzugte Weiterbildungen der Erfindung ergeben sich aus den Kombinationen der Ansprüche oder einzelner Merkmale davon.

Die Erfindung soll nachgehend eingehender anhand einiger Ausführungsbeispiele und der zugehörigen Figuren erläutert werden. Die Ausführungsbeispiele sollen dabei die Erfindung erläutern ohne diese zu beschränken.

Es zeigen die Figuren in
- **Fig. 1**: eine schematische Darstellung eines erfindungsgemäßen Formteils zur Wandverkleidung, in
- **Fig. 2**: eine schematische Darstellung der Rückseite eines erfindungsgemäßen Formteils zur Wandverkleidung, in
- **Fig. 3**: eine Draufsicht eines erfindungsgemäßen Formteils zur Wandverkleidung, in
- **Fig. 4**: eine schematische Darstellung der Draufsicht auf die Rückseite eines erfindungsgemäßen Formteils zur Wandverkleidung, in
- **Fig. 5**: eine schematische Darstellung einer Seitenansicht entlang der Längsseite eines erfindungsgemäßen Formteils zur Wandverkleidung und in
- **Fig. 6**: eine schematische Darstellung einer Seitenansicht entlang der Querseite eines erfindungsgemäßen Formteils zur Wandverkleidung mit strukturierter Oberfläche.

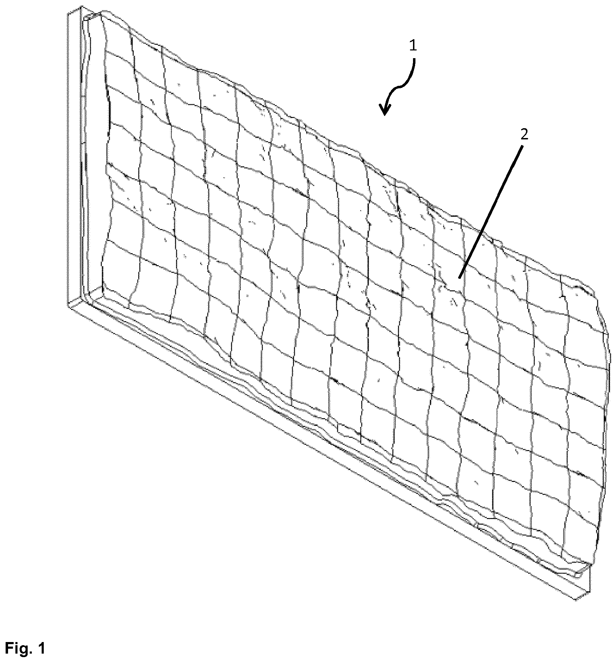

In einem ersten Ausführungsbeispiel ist in Fig. 1 ein erfindungsgemäßes Formteil 1, welches dargestellt, welches aus einem Harnstoff-Formaldehyd-Harz mit einer Rohdichte von 1,49- 1,52 g/cm³ nach DIN 53479 im Warmpressverfahren hergestellt wurde. Das Formteil 1, welches in einer ersten Ausführungsform als Fliese ausgestaltet ist, weist dabei eine im Wesentlichen ebene Oberfläche 2 auf. Nach dem Pressvorgang wird das Formteil zunächst für 7 Tage bei 20 bis 25°C und einer maximalen Luftfeuchte von 40% gelagert. Das Formteil 1 weist dabei auf der Oberfläche 2 des Formteils 1 eine Strukturierung auf. Die Strukturierung dient dabei dazu, Steinstrukturen nachzuahmen. Dabei wird eine unregelmäßig strukturierte Oberfläche bereits durch die Pressform vorgegeben, sodass das Formteil 1 nach dem Pressvorgang bereits eine entsprechende Strukturierung aufweist. In Kombination mit den besonderen haptischen Eigenschaften des Harnstoff-Formaldehyd-Harzes ergibt sich dabei haptisch der Eindruck einer mineralischen Oberfläche.

In einem weiteren Ausführungsbeispiel der Erfindung erfolgt die Herstellung des erfindungsgemäßen Formteils 1 gemäß dem vorbeschriebenen Ausführungsbeispiel, wobei vor dem Warmpressen dem Harnstoff-Formaldehyd-Harz Zuschlagstoffe in Form von Pigmenten mit einem Anteil von 2 Gew.-% der Formmasse zugegeben werden. Danach erfolgt eine homogene Vermischung der Pressmasse und anschließend der Warmpressvorgang.

Das so erhaltene Formteil weist eine Färbung auf und vermittelt eine natürliche Gesteinsoptik.

In einer Ausgestaltung des vorbeschriebenen Ausführungsbeispiels werden die Zuschlagstoffe, wie beispielsweise Pigmente, vor dem Warmpressvorgang in dem Werkzeug vorgelegt und anschließend die Harnstoff-Formaldehyd-Harz-Masse zugegeben und verpresst. Dadurch erfolgt keine homogene Verteilung in der Formmasse und das so erhaltene Formteil weist eine inhomogene Färbung mit unterschiedlicher Gefügestruktur auf.

In einer alternativen Ausgestaltung des Ausführungsbeispiels wird eine Harnstoff-Formaldehyd-Harz-Formmasse verwendet, welche eine Dichte von um 1,5 g/cm³ nach ISO 1183 aufweist. Eine beispielhaft geeignete Formmasse ist etwa Urochem Moulding Compound 162 (Chemiplastica SpA, Italien).

Danach erfolgt die Applikation der Deckbeschichtung, welche beispielsweise mittels Sprühpistole oder Trichterspritzpistole aufgetragen wird. Dabei wird beispielsweise eine Mischung mit einer Zusammensetzung aus 30% Polyesterharz, 10% Klarlack, 15% Härter, 20% Pigment (Farbe), 15% Naturlehmpulver und 10% Gesteinspulver appliziert. Das Gesteinspulver weist dabei eine Körnung nach Maßgabe des Anwenders auf. Je nach Körnung kann die Strukturierung und Haptik der beschichteten Oberfläche den Wünschen des Anwenders angepasst werden. Zudem können dem Gesteinspulver noch Quarzsand oder Steingranulate beigemischt werden. Durch das vorherige Zusammenwirken von Vernetzerschicht und Wärmeeintrag und der nachfolgenden Applikation der Deckschicht erfolgt eine teilweise Ablagerung des Pulvers auf der Oberfläche des zu beschichtenden Formteils. Vorzugsweise erfolgt die Beschichtung etwa im Zeitraum von 15 bis 30 min nach der Aktivierung durch Wärmeeintrag und Vernetzerschicht.

Alternativ kann als Wärmeeintrag eine Beflammung der Oberfläche erfolgen. Ebenfalls denkbar ist die Verwendung eines Plasmas zum Eintrag reaktiver Gruppen auf die Oberfläche. Zudem ist denkbar, dass vor der Aktivierung durch Wärmeeintrag und Vernetzerschicht eine Reinigung der Oberfläche mit CO₂ erfolgt.

Die CO₂-Eisreinigung ist ein rückstandsfreies Strahlverfahren mit breitem Anwendungsgebiet. Als Strahlmittel werden entweder CO₂-Eispellets oder CO₂-Schnee verwendet. Im Auftreffbereich des CO₂ ziehen sich die Verunreinigungen infolge des Temperaturschocks zusammen, werden durch Versprödung von der Oberfläche abgelöst und durch den Impuls des CO₂-Strahls und die Sublimation des festen CO₂ abgetragen. Mit dem CO₂-Strahlverfahren können filmartige und partikelartige Verunreinigungen von den verschiedensten Grundmaterialien entfernt werden, ohne diese zu beschädigen.

Anschließend wird die beschichtete Oberfläche für 24 h bei min. 25°C und 40% Luftfeuchte gelagert.

In einer Ausgestaltung des Ausführungsbeispiels erfolgt eine weitere Beschichtung, welche eine einheitliche Farbgebung gewährleistet. Dazu wird vorteilhafterweise Klarlack oder Klebstoff mittels Sprühverfahren als feiner Nebel auf die Oberfläche aufgebracht und anschließend eine Farbpigmentmischung durch einen Zerstäubungsprozess auf der Oberfläche angeordnet.

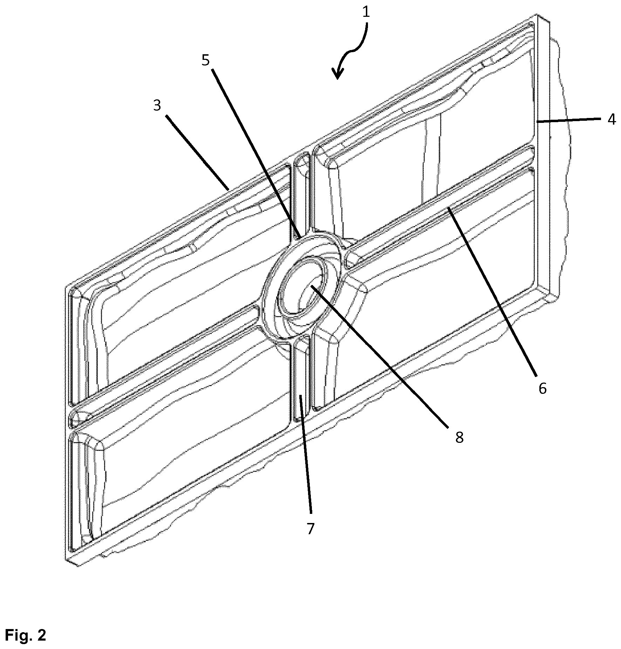

In der Fig. 2 ist die Rückseite 3 des in Fig. 1 dargestellten Formteils 1 und wiedergegeben. Das Formteil 1 weist dabei auf der Rückseite 3 eine Vertiefung auf sowie einen Randbereich 4, welcher diese Vertiefung umlaufend einfasst. Im Zentrum der Vertiefung auf der Rückseite 3 des Formteils 1 ist eine Erhebung 5 angeordnet, welche vorzugsweise radial ausgeführt ist. Die Erhebung 5 weist dabei selbst eine Vertiefung 8 auf, welche als Klebepunkt ausgeführt ist. Der Klebepunkt 8 dient dabei der Anordnung des Formteils 1 an die zu verkleidende Oberfläche, wobei der Klebepunkt 8 zur Aufnahme des Adhäsionsmittels, welches vorzugsweise ein Kleber ist, ausgestaltet ist. Daneben sind auf der Rückseite 3 weiterhin vier stegförmige Elemente 6 angeordnet, welche zwischen der Erhebung 5 und dem Randbereich angeordnet sind und zueinander vorzugsweise einen rechten Winkel aufweisen. Diese stegförmigen Elemente 6 dienen dabei der Stabilisierung des Formteils 1 beispielsweise gegen Verzug. Optional können diese stegförmigen Elemente 6 eine Nut 7 aufweisen, welche zur Aufnahme eines Adhäsionsmittels, etwa eines Klebers, ausgestaltet ist.

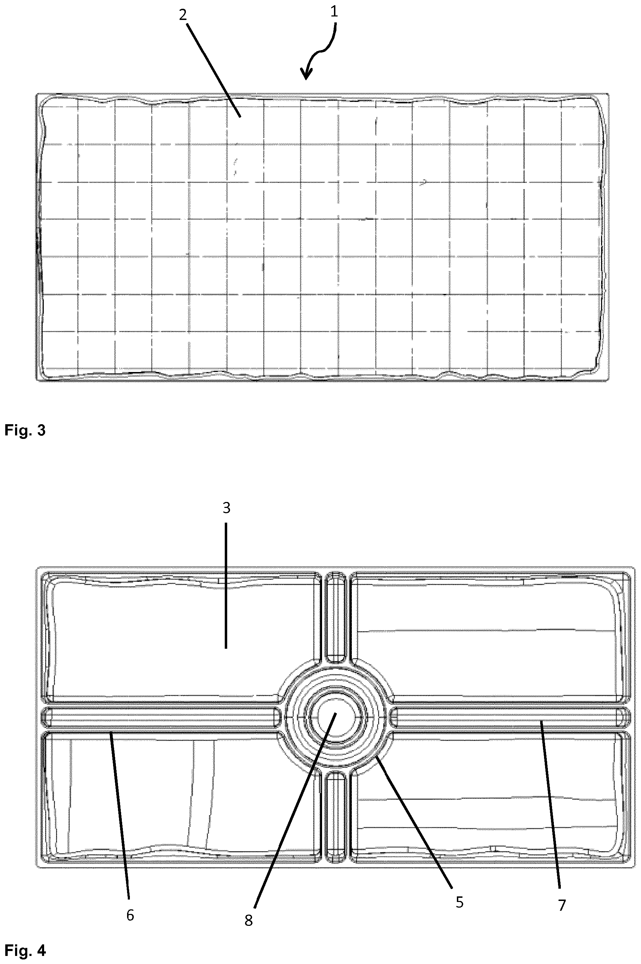

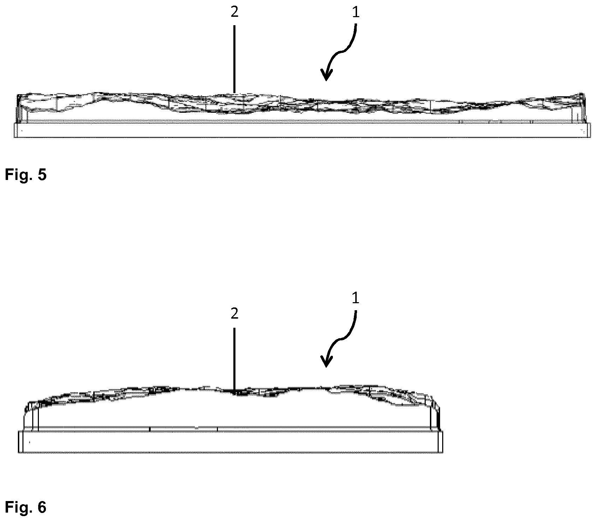

In den Fig. 3 und 4 ist jeweils eine Draufsicht auf die Ober- und Unterseite des vorbeschriebenen Ausführungsbeispiels dargestellt. Die Fig. 5 und 6 zeigen weiterhin Seitenansichten des Formteil1 entlang der Längs- und Querseite.

In einer alternativen Ausgestaltung des vorbeschriebenen Ausführungsbeispiels dargestellt. Dabei weist das erfindungsgemäße Formteil 1 im Randbereich 4 ein nicht näher dargestelltes Verbindungsmittel auf, welches vorliegend als Steckverbindung ausgeführt und zur Verbindung mit einem nicht näher dargestellten Gegenstück ausgebildet ist. Dadurch ist gerichtete Anordnung des Formteils 1 auf der zu verkleidenden Oberfläche möglich, was zu einem optisch ansprechenden Erscheinungsbild der verkleideten Oberfläche führt.

In einer alternativen Ausgestaltung der oben beschriebenen Ausführungsbeispiele weist die Oberfläche 2 des Formteils 1 keine Strukturierung, sondern eine im Wesentlichen ebene Fläche auf.

In einem weiteren Ausführungsbeispiel ist eine nachfolgende Beschichtung der strukturierten Oberfläche vorgesehen, wobei die strukturierte Oberfläche 2 mit einem Adhäsionsmittel, wie einem Kleber, beschichtet wird und auf die Adhäsionsschicht ein pulverförmiges Material aufgebracht wird. Als solch ein pulverförmiges Material kann dabei Sand, Gesteinsmehl oder dergleichen verwendet werden. Anschließend erfolgt eine Fixierung des pulverförmigen Materials mit einer Lackschicht, etwa Klarlack.

### Bezugszeichen

- 1: plattenförmiges Bauelement
- 2: Oberfläche des plattenförmigen Bauelements
- 3: Rückseite des plattenförmigen Bauelements
- 4: Randbereich
- 5: Erhebung
- 6: stegförmiges Element
- 7: Nut
- 8: Klebepunkt

## Patentansprüche

1. Verfahren zur Herstellung eines Formteils, welches einstückig aus einem duroplastischen Kunststoff ausgeführt ist, zur Verkleidung von Wänden und Mauerwerk,
wobei das Formteil durch ein Warmpressverfahren hergestellt wird, **dadurch gekennzeichnet, dass**
- das Formteil aus einer Kunststoffmasse enthaltend eine Harnstoff-Formaldehyd-Harz-Formmasse mit einer Rohdichte von 1,49 - 1,52 g/cm³ nach DIN 53479 hergestellt wird, wobei der Harnstoff-Formaldehyd-Harz-Formmasse Zuschlagstoffe zugegeben werden, wobei der Anteil der Zuschlagstoffe <20 Gew.-%, bevorzugt <10 Gew.-%, besonders bevorzugt < 2 Gew.-% beträgt und wobei die Zuschlagstoffe ausgewählt sind aus pulverförmigen Materialien oder farbigen Pressmassen.

2. Verfahren nach Anspruch 1, **dadurch gekennzeichnet, dass** die Presstemperatur 100°C-200°C, vorzugsweise 130°C bis 180°C beträgt.

3. Verfahren nach Anspruch 1 oder 2, **dadurch gekennzeichnet, dass** der Pressdruck 115 bar-300 bar beträgt.

4. Verfahren nach Anspruch 1, **dadurch gekennzeichnet, dass**
- die Zuschlagsstoffe vor dem Pressvorgang mit der Harnstoff-Formaldehyd-Harz-Formmasse homogen vermischt und anschließend verpresst werden
oder
- die Zuschlagsstoffe zuerst in das Werkzeug eingebracht und anschließend die Formaldehyd-Harz-Masse zugegeben und anschließend verpresst wird.

5. Formteil zur Verkleidung von Wänden und Mauerwerk hergestellt nach einem Verfahren nach einem der Ansprüche 1 bis 4.

6. Formteil nach Anspruch 5, **dadurch gekennzeichnet, dass** das Formteil auf einer Seite eine strukturierte Oberfläche aufweist oder das Formteil auf der einen Seite der Oberfläche im Wesentlichen eben ausgebildet ist.

7. Formteil nach Anspruch 6, **dadurch gekennzeichnet, dass** die Oberfläche des Formteils beschichtet ist.

8. Formteil nach Anspruch 7, **dadurch gekennzeichnet, dass** als Beschichtung pulverförmige Materialien oder Lacke auf die Oberfläche aufgebracht sind.

9. Formteil nach Anspruch 8, **dadurch gekennzeichnet, dass** das pulverförmige Material optisch einen Gesteinseindruck vermittelt.

10. Verwendung eines Verfahrens zur Herstellung eines Formteils nach einem der Ansprüche 1 bis 4 sowie eines Formteils nach einem der Ansprüche 5 bis 9 zur Verkleidung von Wänden und Mauerwerk.

## Claims

1. Method for producing a moulded part which is formed in one piece from a thermosetting plastic and intended for cladding walls and masonry, the moulded part being produced by hot pressing, **characterized in that** the moulded part is produced from a plastics compound containing an urea-formaldehyde resin moulding compound with a bulk density of 1.49-1.52 g/cm³ in accordance with DIN 53479, additives being added to the urea-formaldehyde resin moulding compound, the proportion of additives being <20 wt.%, preferably <10 wt.%. %, particularly preferably <2 wt.%, and the additives being selected from powdered materials or coloured moulding compounds.

2. Method according to claim 1, **characterized in that** the pressing temperature is 100°C-200°C, preferably 130°C to 180°C.

3. Method according to either claim 1 or claim 2, **characterized in that** the pressing power is 115 bar-300 bar.

4. Method according to claim 1, **characterised in that**
- the additives are mixed homogeneously with the urea-formaldehyde resin moulding compound before pressing, and then pressed,
or
- the additives are first introduced into the tool, after which the formaldehyde resin compound is added, and then pressed.

5. Moulded part for cladding walls and masonry, produced by a method according to any of claims 1 to 4.

6. Moulded part according to claim 5, **characterized in that** the moulded part has a structured surface on one side, or the moulded part is essentially flat on one side of the surface.

7. Moulded part according to claim 6, **characterized in that** the surface of the moulded part is coated.

8. Moulded part according to claim 7, **characterized in that** powdered materials or varnishes are applied to the surface as a coating.

9. Moulded part according to claim 8, **characterized in that** the powdered material imparts a stone-like visual appearance.

10. Use of a method for producing a moulded part according to any of claims 1 to 4 and of a moulded part according to any of claims 5 to 9 for cladding walls and masonry.

## Revendications

1. Procédé de fabrication d'une pièce moulée formée d'une seule pièce à partir d'une matière plastique thermodurcissable pour le parement de murs et de murages, la pièce moulée étant fabriquée par un procédé de pressage à chaud, **caractérisé en ce que** la pièce moulée est fabriquée à partir d'une masse de matière plastique contenant une matière moulable en urée-formaldéhyde-résine avec une densité apparente de 1,49 à 1,52 g/cm³ selon la norme DIN 53479, des agrégats étant ajoutés à la matière moulable en urée-formaldéhyde-résine, la proportion d'agrégats étant de < 20 % en poids, de préférence de < 10 % en poids, de manière particulièrement préférée de < 2 % en poids, et les agrégats étant choisis parmi des matériaux pulvérulents ou des matières pressées colorées.

2. Procédé selon la revendication 1, **caractérisé en ce que** la température de pressage est de 100 °C à 200 °C, de préférence de 130 °C à 180 °C.

3. Procédé selon la revendication 1 ou 2, **caractérisé en ce que** la pression de pressage est de 115 bar à 300 bar.

4. Procédé selon la revendication 1, **caractérisé en ce que**
- les agrégats sont mélangés de manière homogène avec la matière moulable en urée-formaldéhyde-résine avant le processus de pressage, puis sont pressés
ou
- les agrégats sont d'abord introduits dans l'outil puis la matière en formaldéhyde-résine est ajoutée puis pressée.

5. Pièce moulée pour le parement de murs et de murages fabriquée selon un procédé selon l'une des revendications 1 à 4.

6. Pièce moulée selon la revendication 5, **caractérisée en ce que** la pièce moulée présente une surface structurée sur un côté ou la pièce moulée est sensiblement réalisée de manière plane sur ledit côté de la surface.

7. Pièce moulée selon la revendication 6, **caractérisée en ce que** la surface de la pièce moulée est revêtue.

8. Pièce moulée selon la revendication 7, **caractérisée en ce que** des matériaux pulvérulents ou des vernis sont appliqués sur la surface en tant que revêtement.

9. Pièce moulée selon la revendication 8, **caractérisée en ce que** le matériau pulvérulent donne visuellement une impression de roche.

10. Utilisation d'un procédé de fabrication d'une pièce moulée selon l'une des revendications 1 à 4 ainsi qu'une pièce moulée selon l'une des revendications 5 à 9 pour le parement de murs et de murages.
